# EUROPEAN PATENT APPLICATION

(11) **EP 1 204 050 A1**
(43) Date of publication of application: **08.05.2002**
(21) Application number: 00925582.9
(22) Date of filing: 10.05.2000
(51) Int. Cl.: G06F 17/60

(54) **NETWORK TRADING SYSTEM AND NETWORK TRADING METHOD**

(30) Priority: 08.11.1999 JP 31751699
(71) Applicant: CYBER SIGN JAPAN Inc., Tokyo 158-0097 (JP)
(72) Inventor: NAGAI, Toshiaki, (JP)
(74) Representative: Leson, Thomas Johannes Alois, Dipl.-Ing.
(86) International application number: JP0002970
(87) International publication number: WO0135285

(57) **Abstract**

There is provided a system which enables safe network trading of "intangible assets" such as proposals and ideas.

In step S4-1, when attempting to browse a members-only WEB pages, the member is prompted to enter his signature. The member enters signature data through use of a handwritten data input pad 16. The thus-entered signature data are supplied from a terminal 14 to a management server 10 by way of the Internet. In step S4-2, the management server 10 compares the thus-entered signature data with authentication signature data that have been registered in advance, thus identifying the member. If in step S4-3 the member has been identified as valid, the member is allowed to browse the members-only WEB pages. In contrast, if the member has been identified as invalid, the member is not allowed to browse the members-only WEB pages (step S4-4). Thus, a member is identified through use of signature data, effectively preventing a malicious third party from pretending to be a member and inviting applications for an idea.

## Description

### Field of the Invention

The present invention relates to a network trading system for inviting applications for intangible assets, such as knowledge or proposals, over a network and conducting business transactions. Particularly, the present invention relates to a network trading system which enhances the safety of trading by use of a biometric technique.

### Background Technology

In recent years, trading of commodity products over a network has been widely employed. In a widely-performed practice, people who desire to sell or buy, for example, cars or TV sets, post their requests on a bulletin board system of a network.

Moreover, there has widely been carried out a so-called auction at which property or goods are sold to the highest bidder, rather than the seller posting of a mere request stating "sell ... at a price of ∼." The auction determines a disclosure period during which commodity products are to be disclosed. A bidder who has bid the highest price for a commodity product during the disclosure period acquires the right to purchase the product.

### Summary of the Invention

As mentioned above, even individuals can readily participate in trading of commodity products over a network, and network trading is effected in a highly convenient system.

Joint research and development have recently been conducted by utilization of a network. For example, invitation of applications for an idea and provision of information (knowledge) are widely been performed over a single corporate network. Such collaboration can be considered not trading of "tangible assets" such as commodity products, but trading of "intangible assets" such as proposals and ideas.

However, difficulties are conceivable in implementing trade of "intangible assets," such as proposals and ideas, over the Internet.

The reason for this is that "intangible assets," such as proposals and ideas, may be easily stolen over the network. In contrast, "tangible assets," such as cars and TV sets, are not stolen even when a message stating that cars and TV sets are desired to be traded is posted on the network, because they are currently owned by a proprietor.

In contrast, when "intangible assets," such as proposals and ideas, are posted on the network, there may be a case where they can be readily browsed or downloaded.

Further, invitation of applications for a proposal or idea reflects on the intention of an individual or a corporation. If such an invitation is posted on the network, a trend in development of a certain corporation may be leaked to competitors. In the case of "tangible assets," such as commodity products, the overall trend in research may be blurred by means of inviting applications for components into which test equipment has been disassembled. In many cases, "intangible assets," such as proposals and ideas, are difficult to decompose. For this reason, a trend in research and development of a commodity product is vulnerable to leaking of intangible assets to competitors.

Against such a backdrop, network trading of "intangible assets," such as proposals and ideas, has been difficult.

The present invention has been conceived in view of these problems and is aimed at providing a system which enables safe trading of "intangible assets," such as proposals and ideas, over a network.

The present invention provides a network trading system which is equipped with a management server and which effects network trading by way of a network among members having been registered in advance, the system comprising:
determination means which, when a member accesses the management server, receives biometric information about the member by way of the network and determines whether or not the member is an authorized member, through use of the received biometric information.

Since biometric information is employed, an appropriate determination can be made as to whether or not a user is an authorized member, thereby posing difficulty to a third party who pretends to be a member. Thus, safe network trading can be effected.

Preferably, the management server includes members-only WWW means which allows browsing by only a person who has been determined to be an authorized member by the determination means.

By means of such a configuration, only authorized members can browse members-only WEB pages, thereby preventing leakage of details of trading to third parties other than the members.

The network trading system is further characterized in that the biometric information corresponds to handwritten signature data pertaining to the member.

The network trading method is further characterized in that whether or not a user is an authorized member can be identified, thereby enabling safer network trading.

The present invention provides a method of effecting network trading by way of a network among members having been registered in advance, wherein registration of a member involves
a temporary registration step in which a person who desires to register himself as a member sends information about himself, including at least his postal address, to the management server by way of the network;
a delivery step in which the management server delivers means for inputting biometric information to the person who desires registration, on the basis of the information about the person;
a registration step in which the person who desires to register himself as a member sends his biometric information to the management server, by way of the Internet and through use of the delivered means to be used for entering biometric information; and
a member registration step in which the person who desires to register himself as a member is registered as a member as a result of the management server storing the biometric information that has been transmitted.

By means of such a configuration, means for entering biometric information is provided to a person who desires to register himself as a member, thereby enabling entry of accurate biometric information. The means is required at the time of trading and is used for entering biometric information. Thus, prevention of a third party from pretending to be a member is improved further.

The network trading method is further characterized in that the biometric information corresponds to handwritten signature data pertaining to the member.

The present invention further provides a method of effecting network trading among predetermined members through use of a management server having an electronic bulletin board function, the method comprising:
an invitation transmission step of sending to the management server by way of a network an invitation of application for an intangible or tangible asset for which a member desires to invite applications;
an invitation posting step of posting on an electronic bulletin board the invitation that has been transmitted;
an invitation browsing step in which other members browse the invitation of applications posted on the electronic bulletin board by means of accessing the management server by way of the network;
an application transmission step in which the members send information about their intangible or tangible assets to the management server by way of the network, in response to the invitation of applications posted on the electronic bulletin board;
an application storage step in which the management server stores the applications that have been transmitted;
an application browsing step in which the member accesses the management server by way of the network, thereby browsing the stored applications; and
an application selection transmission step in which the member selects a desired application from the applications having been browsed and sends the result of selection to the management server by way of the network, wherein
the management server identifies the member who has invited applications and the members who have filed applications as authorized members when they access the management server and allows them to access the management server only when they are identified as authorized members.

By means of such a configuration, whether or not a user is an authorized member is identified by use of biometric information. Hence, only a member can invite applications for an intangible or tangible asset.

The network trading method is further characterized in that the biometric information corresponds to handwritten signature data pertaining to the members.

By means of such a configuration, whether or not a user is an authorized member can be identified by use of handwritten signature data, thereby embodying safer network trading.

The network trading method is characterized in that the invitation posting step further includes:
a public-order-and-standards-of-decency step of inspecting whether or not the intangible asset for which applications are invited violates public order and standards of decency; and
a first posting refusal step of refusing posting of the invitation on the electronic bulletin board when the intangible asset has been determined to violate public order and standards of decency in the public-order-and-standards-of-decency step.

Such a configuration prevents posting of an invitation of application for an intangible or tangible asset which would violate public order and standards of decency, thus embodying wholesome network trading.

The network trading method is further characterized in that the invitation posting step further includes:
a public-order-and-standards-of-decency step of inspecting whether or not an invitation of applications for an intangible asset analogous to an intangible asset for which invitation of applications is desired has already been posted on the electronic bulletin board; and
a second posting refusal step of refusing posting of the invitation on the electronic bulletin board when an invitation of applications for an analogous intangible asset is determined to have already been posted on the electronic bulletin board.

Such a configuration prevents invitation of applications for an analogous intangible asset, thereby preventing stealing of, e.g., an idea.

The network trading method is further characterized in that, in the application browsing step, the number of times other members have browsed details of the invitation of applications for the intangible or tangible asset is displayed for the other members.

Since the number of times browsing has been effected can be grasped, the nature of an intangible or tangible asset in which other members have interest can be ascertained.

The network trading method is further characterized in that, in the application browsing step, the number of applications which have been filed thus far in response to the invitation is displayed for the other members.

Since the number of applications having been filed thus far can be grasped, members who attempt to file applications for an intangible or tangible asset can ascertain a rate of rejection.

The network trading method is further characterized in that, in the application selection transmission step, the member can select one application or two or more applications.

Since a plurality of applications can be selected, a plurality of intangible or tangible assets can be implemented in combination.

The network trading method is further characterized in that, in the application selection transmission step, the member can invite an additional application for an intangible asset that represents an improvement over the intangible asset for which the selected application has been filed, in connection with a person who has filed the application selected by the member.

Since a member can successively request a person who has conceived a superior intangible asset to conceive an improved intangible asset, successive acquisition of improved intangible assets becomes feasible.

The present invention also provides a method of effecting network trading among predetermined members through use of a management server having an electronic bulletin board function, the method comprising:
a sale transmission step of sending a message stating intent to launch sale of intangible or tangible asset for which a member desires to launch sale to the management server by way of a network;
a sale posting step of posting on an electronic bulletin board the message stating intent to launch sale that has been transmitted;
a sale browsing step in which other members browse the message stating intent to launch sale posted on the electronic bulletin board by means of accessing the management server by way of the network;
an adoption transmission step in which the members send, to the management server by way of the network, messages stating that adoption of the intangible or tangible asset in response to the messages stating intent to launch sale posted on the electronic bulletin board;
an adoption storage step in which the management server stores the messages that state an intention of adoption and have been transmitted;
an adoption browsing step in which the member accesses the management server by way of the network, thereby browsing the stored messages; and
an adoption selection transmission step in which the member selects a desired offer from the messages which have been browsed and state the intention of adoption and sends the result of selection to the management server by way of the network, wherein
the management server identifies the member who has launched sale of his idea and the members who have offered adoption as authorized members when they access the management server and allows them to access the management server only when they are identified as authorized members.

By means of such a configuration, a user is identified as an authorized member on the basis of biometric information, thereby enabling only a member to sell his intangible or tangible asset.

Further, the network trading is characterized in that the biometric information corresponds to handwritten signature data pertaining to the members.

By means of such a configuration, whether or not a user is an authorized member can be identified by use of handwritten signature data, thereby embodying safer network trading.

The network trading method is characterized in that the sale posting step further includes:
a public-order-and-standards-of-decency step of inspecting whether or not the intangible asset for which launch of a sale is desired violates public order and standards of decency; and
a first posting refusal step of refusing posting of the message stating intent to launch sale on the electronic bulletin board when the intangible asset has been determined to violate public order and standards of decency in the public-order-and-standards-of-decency step.

Such a configuration prevents posting of an intangible or tangible asset which would violate public order and standards of decency, thus embodying wholesome network trading.

The network trading method is further characterized in that, in the sale browsing step, the number of times other members have browsed details of the intangible or tangible asset for which sale has been launched is displayed for the other members.

The network trading method is further characterized in that, in the sale browsing step, the number of adoptions which have been offered thus far is displayed for the other members.

The network trading method is further characterized in that, in the adoption selection step, the member can select one offer or two or more offers.

Since a plurality of offers can be adopted, an intangible or tangible asset can be offered to a plurality of members.

The network trading method is further characterized in that the intangible asset corresponds to knowledge.

The intangible asset may correspond to anything other than a tangible asset; for example, mere knowledge. For example, the intangible asset may be information about restaurants which serve pretty good dishes. Such information can be an object of trading.

The network trading method is further characterized in that the intangible asset corresponds to an idea or a proposal.

The intangible asset may be an idea or proposal other than knowledge. It is well known that good ideas can be objects of trading. Conceivably, there may be many cases in which a research center seeks new ideas for research and development from outside the center.

The network trading method is further characterized in that the intangible asset corresponds to know-how.

Know-how is accumulated through experience and intuition and often plays an important role in research and development or development of a product. Hence, know-how can also be an object of trading.

The network trading method is further characterized in that the intangible asset corresponds to intellectual property.

Intellectual property such as a patent right has widely been admitted to be a property right. In many cases, the intellectual property has high economic value and can be an object of trading.

The network trading method is characterized by further comprising a trading result disclosure step of disclosing to the general public as well as to members at least details of an intangible or tangible asset for which a contract has been concluded and a payment when network trading of the intangible or tangible asset has been established.

Since the result of trading is widely disclosed to the general public, the network trading method can be advertised effectively.

The present invention also provides a management server used in a network trading system for effecting network trading among predetermined members, the server comprising:
general WWW means for providing a WEB page browsable by the general public as well as by members; and
members-only WWW means for providing a WEB page browsable by members only.

Such a configuration enables provision of a WEB page browsable by anybody, as well as the members-only WEB page. Hence, so-called on-line registration of members can be effected, thereby enabling highly-convenient network trading.

The management server is characterized by further comprising personal authentication means for inspecting biometric information that has been transmitted by way of a network and identifying whether or not a person who has sent the information is an authorized member; and wherein the members-only WWW means allows browsing by only a person who has been determined to be an authorized member by the personal authentication means.

The management server is further characterized in that the biometric information corresponds to handwritten signature data.

Whether or not a user is an authorized member is identified by means of handwritten signature data. Hence, there can be avoided a risk of a third party pretending to be a member and participating in network trading.

### Brief Description of the Drawings

Fig. 1 is a block diagram showing the overall network trading system according to a preferred embodiment of the present invention;
Fig. 2 is a functional block diagram showing a management server;
Fig. 3 is a flowchart showing sign-up procedures;
Fig. 4 is a flowchart showing operations required when an attempt is made to browse a members-only WEB page;
Fig. 5 is a flowchart showing operations for inviting applications for an idea;
Fig. 6 is a flowchart showing operations required when applications are filed in response to the invitation;
Fig. 7 is a descriptive view showing a table of invitations of applications for ideas;
Fig. 8 is a flowchart showing operations required when applications are browsed;
Fig. 9 is a flowchart showing operations when sale of an idea is launched;
Fig. 10 is a flowchart showing operations required when ideas for which sale has been launched are browsed;
Fig. 11 is a descriptive view showing a table of ideas for sale; and
Fig. 12 is a flowchart showing operations required when adoption of the idea for sale is offered.

### Best Modes for Implementing the Invention

Preferred embodiments of the present invention will be described hereinbelow by reference to the accompanying drawings.

### Embodiment 1

### 1 Basic Configuration

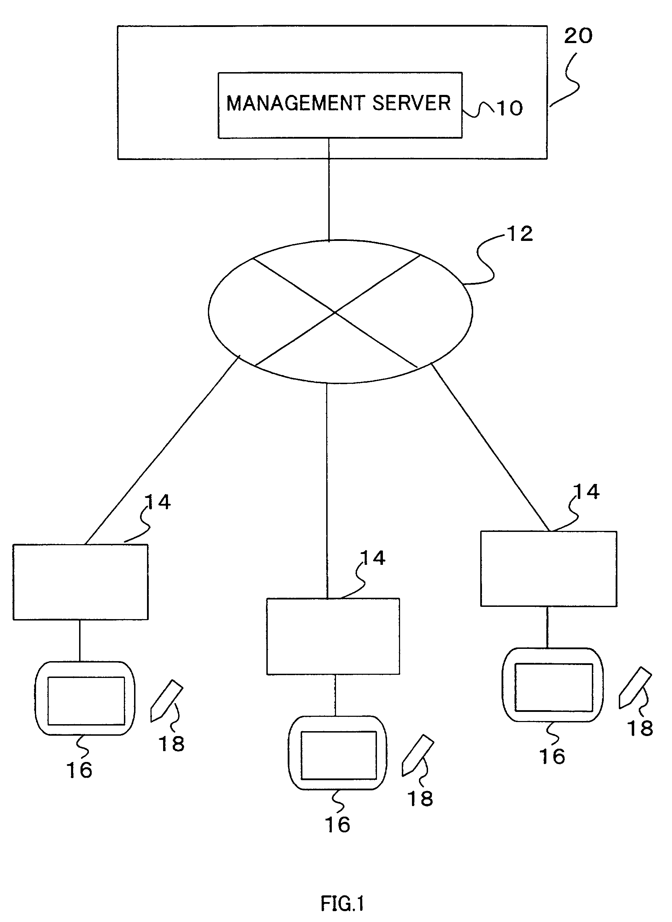

Fig. 1 shows an overview of a network trading system according to preferred Embodiment 1 of the present invention.

As illustrated, the network trading system has a management server 10 for carrying out trading tasks. A trading company 20 which operates the network trading system manages the management server 10. A plurality of terminals 14 belonging to members can be connected to the management server 10 over the Internet 12.

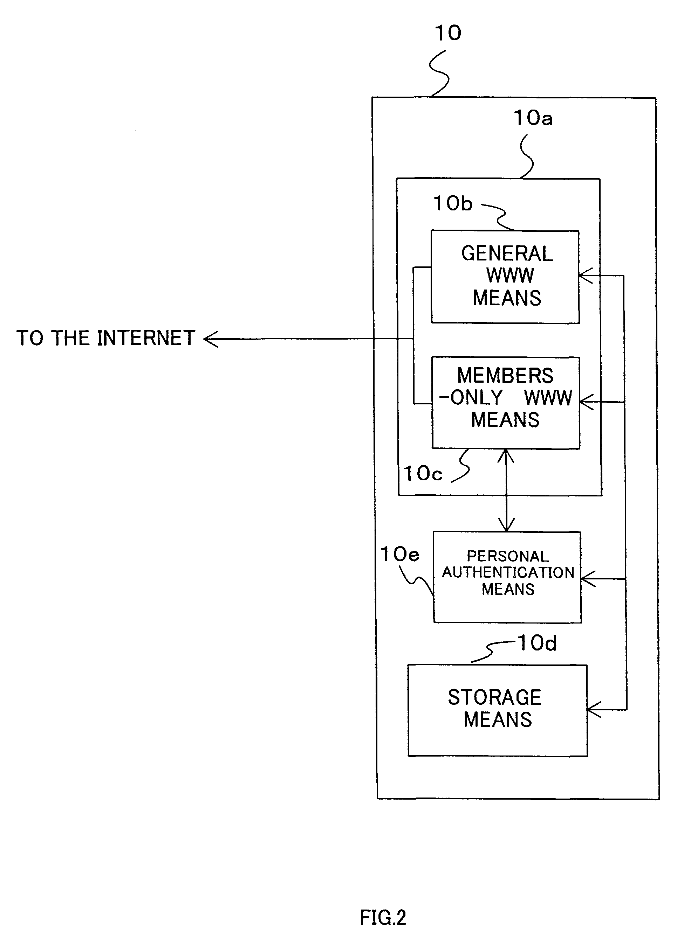

Fig. 2 is a functional block diagram of the management server 10. As illustrated, the management server 10 is equipped with WWW means 10a which provides WEB pages for the WWW by way of the Internet 12. The WWW means 10a has a general WWW means 10b for providing WEB pages for disclosure, and a members-only WWW means 10c for providing WEB pages to only members of the network trading system.

The management server 10 is further equipped with personal authentication means 10e. The personal authentication means 10e prompts a person who attempts to browse members-only WEB pages provided for only members to enter biometric information and determines whether or not the person is an authorized member. The members-only WWW means 10c delivers to the personal authentication means 10e biometric information (in particular, handwritten signature data in the present embodiment) which has been sent from a member, and the personal authentication means 10e determines whether or not the person is an authorized member. The members-only WWW means 10c grants permission to browse members-only WEB pages only to a person who has been determined to be an authorized member by the personal authentication means 10e. Flow of specific operations of these means will be described in detail later.

The personal authentication means 10e is constituted of a program for subjecting biometric information to comparison and matching. In particular, in the present embodiment, signature data are used as biometric information. The personal authentication means 10e compares and matches authentication signature data stored in storage means 10d to be described later with signature data entered at the time of an attempt to browse WEB pages.

Specifically, the WWW means 10a is constructed of a CPU, a program, and Internet communications means. The members-only WWW means 10c and the general WWW means 10b are essentially implemented by analogous programs. Authentication of signature data is performed in the manner as mentioned previously only when members-only WEB pages are provided, thus embodying WEB pages browsable for members only.

The personal authentication means 10e is constructed of signature data stored in storage means 10d to be described later, a program to be used for comparing and matching the stored authentication signature data with received signature data, and a CPU.

The management server 10 is equipped with the storage means 10d. The storage means 10d is storage means; e.g., a hard disk. As will be described later, all data and actions, such as authentication signature data pertaining to members, an idea for which applications are invited, a selected category, browsed ideas, and clicking operations, are stored in the storage means 10d.

A person who desires to utilize the network trading system must gain membership in the system. The members participate in trading by means of exchanging trading information with each other by way of the terminals 14.

A feature of the network trading system lies in that handwritten signature data are utilized for protecting security of the members. Utilization of signature data enables accurate identification of a person (i.e., ascertainment about whether a person is an authorized member), and consequently safer trading can be conducted over the network (the Internet).

In order to enable use of signature data, each of the terminals 14 owned by members is provided with a handwritten data input pad 16 and a pen 18 for enabling entry of signature data to be used for signature matching.

Each of the members enters his signature data by utilization of the handwritten data input pad 16 and sends the data to the management server 10, whereby the member is identified as an authorized member.

Operations of the network trading system will be described sequentially. All the operations to be described later are stored in archives in the storage means 10d provided in the management server 10.

By means of referring to the archives, the trading company 20 can ascertain actions of respective members (e.g., invitation of applications for an idea, filed applications for the idea, browsing operations, and an application for adopting an idea).

### 2. Operation

Operations of the network trading system are now described sequentially on a per-operation basis.
(1) Signup Procedures for gaining membership
(2) Invitation of applications for an idea
(3) Filed applications for the idea
(4) Browsing of filed applications, and conclusion of a contract
(5) Launching the sale of an idea
(6) Adoption of an idea for which a sale has been launched
(7) Browsing of members who desire to adopt an idea, and conclusion of a contract

### 2-1 Signup Procedures

Membership is required for participating in the network trading system, inviting applications for an idea, sale of an idea, filing an application for an idea, or adopting an idea. The reason for this is that a trading entity is limited to members in order to realize safer trading.

A person who desires to acquire membership (i.e., an applicant for membership) can gain membership by means of registering in the management server 10. Signup procedures (i.e., procedures for registering members) will be described by reference to a flowchart.

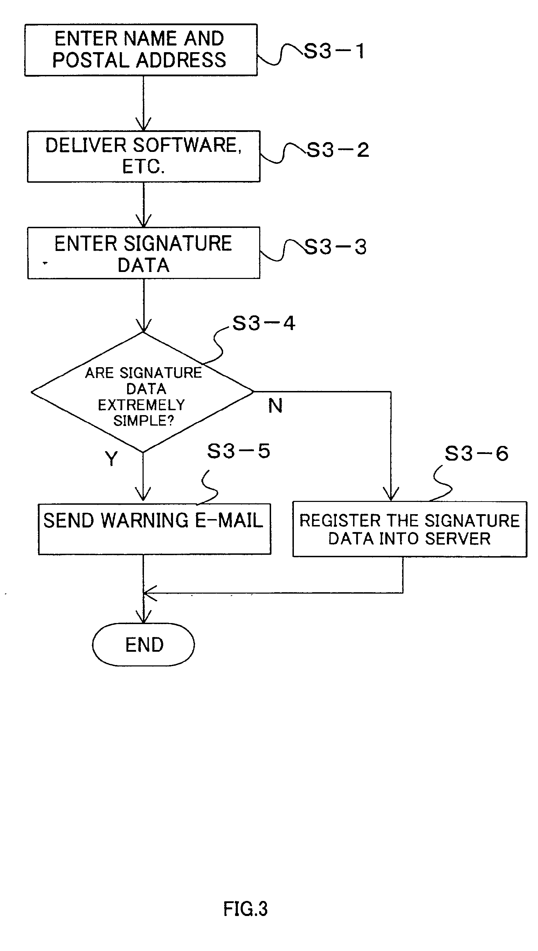

Fig. 3 is a flowchart representing operations of signup procedures.

In step S3-1, an applicant browses a WEB page for application on the Internet and enters his name and postal address. As a result, the management server 10 can learn the name and postal address of the applicant. Registering the applicant's name and postal address into the management serer 10 is called temporary registration.

Anybody, not only members, can view the WEB page, and the general WWW means 10b provides the WEB page.

In order to strictly authenticate personal identification, sending ID documents for identifying a person, such as a passport or a driver's license, to the trading company 20 is also preferable in addition to so-called online application being effected by way of the WEB page.

In step S3-2, predetermined software, a handwritten data input pad 16, and a pen 18 are delivered to the thus-temporarily-registered person. These items are delivered by personnel of the trading company 20. Further, the personnel of the trading company 20 also check the documents, such as a passport, sent from the applicant.

The software is used for authenticating personal identification by use of handwritten signature data to be described later. The software is control software for controlling the handwritten data input pad 16. Through use of the software, a user can enter handwritten signature data by way of the terminal 14.

In step S3-3, the user installs the received software into the terminal 14, and the handwritten data input pad 16 and the pen 18 are connected to the terminal 14.

The user again opens the WEB page for application purpose. The user enters his signature data by way of the handwritten data input pad 16 by means of utilizing the software. The thus-entered signature data are registered into the management server 10 by way of the Internet 12. Here, signature data are stored in the storage means 10d of the management server 10.

In step S3-4, a determination is made as to whether or not input signature data are very simple. Such inspection is performed by the personnel of the trading company 20.

If the signature data are determined to be very simple, a warning electronic mail is sent to the user, thereby prompting the user to change the current signature data to more complicated signature data (step S3-5). If the signature data are determined not to be extremely simple, the management server 10 is instructed to register the signature data as authentication signature data, thus completing registration of the user as a member (step S3-6). After registration has been completed in step S3-6, an electronic mail stating that the user has been registered is delivered to the new member.

The reason for excluding extremely simple signature data is that counterfeiting of extremely simple signature data is easy. Hence, extremely simple signature data are not favorable in terms of security.

### 2-2 Procedures for Inviting Applications for an Idea

Operations required when a member invites applications for an idea are now described by reference to a flowchart.

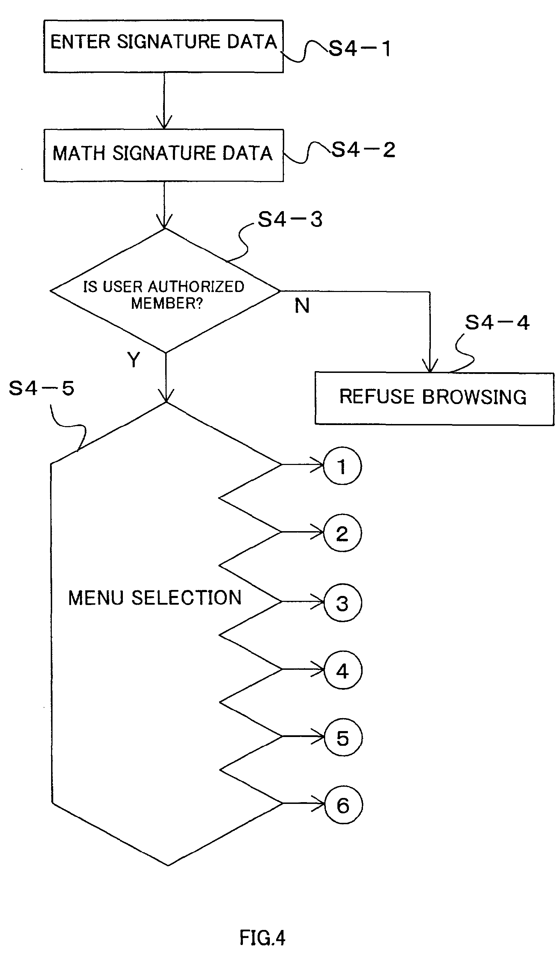

Fig. 4 is a flowchart representing operations for inviting applications for an idea.

In step S4-1, a member attempts to browse the members-only WEB pages. When attempting to browse the members-only WEB pages, the member is prompted to enter his signature. The member enters signature data through use of the handwritten data input pad 16. The thus-entered signature data are supplied from the terminal 14 to the management server 10 by way of the Internet.

In step S4-2, the management server 10 compares the thus-entered signature data with the authentication signature data that have been registered in advance, as a result of which the personal authentication means 10e identifies the member.

If in step S4-3 the member has been identified as valid, the member is allowed to browse the members-only WEB pages, and processing proceeds to step S4-5. In contrast, if the member has been identified as invalid by the personal authentication means 10e, the member is not allowed to browse the members-only WEB pages (step S4-4).

In the present embodiment, a member is identified through use of signature data, effectively preventing a malicious third party from pretending to be a member and inviting applications for an idea.

In step S4-5, a menu screen appears on the terminal 14 of the member who is allowed to browse the members-only WEB pages. The member selects a desired operation on the menu screen. Available menu items are as follows:
(1) Invitation of applications for an idea
(2) Filed applications for an idea
(3) Browsing the applications, and Conclusion of a Contract
(4) Launching the sale of an idea
(5) Adoption of an Idea for which a sale has been launched
(6) Browsing of members who desire to adopt an idea, and conclusion of a contract

To invite applications for an idea, the member selects Menu item (1). Menu items (2) through (6) will be sequentially described later.

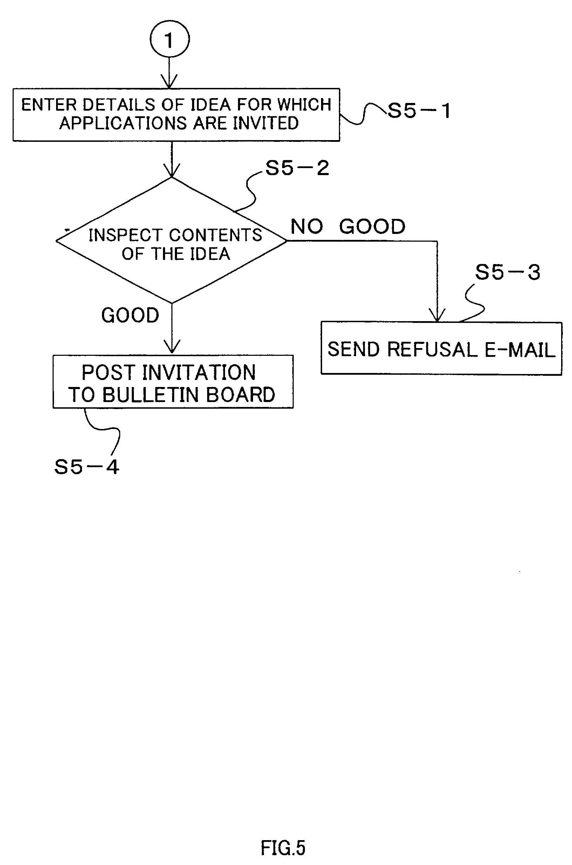

The member who has selected Menu item (1) proceeds to a step of filling entries required for inviting application for ideas. A flowchart representing this operation is shown in Fig. 5.

In step S5-1, there appears on the terminal 14 of the member a WEB page on which entries required for inviting applications for an idea are to be filled. The member fills on the WEB page entries required for inviting applications for an idea.

Various entries are conceivable. In the present embodiment, the member is required to enter, e.g., a title, details of a desired idea, and offering price. For instance, a title is "Method of Recognizing Signature Data"; details of a desired idea are "An efficient algorithm for recognizing signature data including writing pressure is sought"; and an offering price is the amount of payment in reward for the idea for which applications are invited.

In step S5-2, inspection is made by personnel of the trading company 20 as to whether or not the entered items are appropriate for trading. The inspection is, in a sense, intended for refusing trading which would violate public order and standards of decency. For instance, invitation of applications for an idea of a "method of bank robbery" is not allowed as an object of trading. Also, as will be described later, if the idea for which applications are invited is similar to an idea for which applications have already been invited, the current invitation is rejected. The reason for this will be described in detail later.

If an invitation of applications for an idea which should be rejected as an object of trading is found as a result of inspection, an electronic mail stating that positing of the invitation on an electronic bulletin board has been rejected is sent to the member who has invited applications for an idea (step S5-3). If as a result of inspection an invitation of applications for an idea has been determined as being allowable as an object of trading, the invitation is posted on the electronic bulletin board on the WEB pages. Further, an electronic mail stating that the invitation has been posted is sent to the member who has invited applications for the idea (step S5-4).

The thus-posted invitation is provided for disclosure for a predetermined period of time. This period of time is a so-called period for advertisement. Members who attempt to file applications for an idea must file applications, such as those to be described later, during this period of time.

During a period of advertisement for a certain idea, the trading company 20 monitors postings in order to prevent posting of an invitation of applications for an idea which addresses the same challenge as that to be addressed by the certain idea. More specifically, when, during a period of advertisement for a certain idea, there has been filed an application for inviting applications for an idea which addresses the same challenge as that to be addressed by the certain idea, the trading company 20 rejects posting of the application on the WEB page.

A conceivable reason for this is that, for example, when Mr. A has invited applications for a certain idea, Mr. B may invite applications for the same idea and steal somebody else' s idea filed in answer to Mr. B's invitation. Subsequently, Mr. B sends the thus-obtained idea to Mr. A as an application. As a result, by means of the idea stolen from somebody else, Mr. B can file an application to the invitation of applications made by Mr. A, as if Mr. B had conceived the idea.

In the present embodiment, the trading company 20 rejects an invitation of applications for an analogous idea during a period of advertisement, in order to prevent stealing of an idea.

### 2-3 Filing Applications for the Invitation

Operations required for selling an idea in response to the invitation; that is, operations required for filing a so-called application, will now be described by reference to a flowchart.

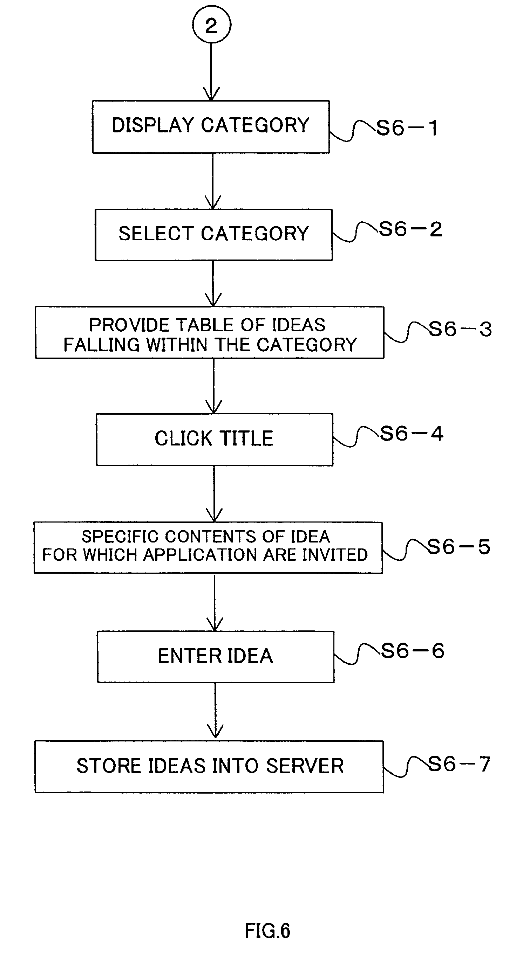

A member who desires to send his idea in an application to the invitation accesses the members-only WEB page. The operations for accessing the WEB page have already been described by reference to Fig. 4. In step S4-5 of the flowchart shown in Fig. 4, the member selects Menu item (2). Operations required to be performed when Menu item (2) has been selected are provided in the flowchart shown in Fig. 6.

In step S6-1, a table prepared according to a category (or field) is displayed on the WEB page. The member selects a category he desires to browse from the WEB page (step S6-2). Categories are provided in accordance with the nature of an idea for which applications are invited. For instance, "Computer-related Fields," "Chemistry," "Automotive Engineering," and "Security Techniques" are provided as categories. A member selects from the categories a field of ideas for which applications are invited and which he desires to browse from the categories.

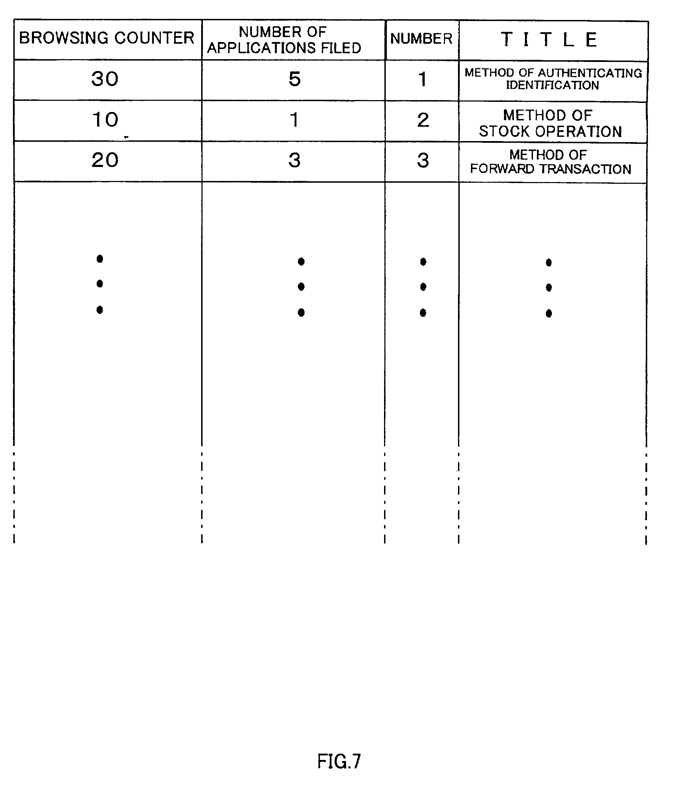

In step S6-3, invitation for applications for an idea included in the thus-selected category are provided in tabular form. Fig. 7 is an illustration for describing the table. As shown in Fig. 7, a single invitation of applications for an idea is assigned a row of entries; that is, "browsing counter," "number of ideas filed for the invitation," "number," and "title of the idea."

The browsing counter shows the number of times other members have browsed details of the invitation for applications of an idea.

The number of ideas filed shows the number of ideas which have already been filed for the invitation.

Number denoted serial numbers assigned to the invitations of applications for ideas, sequentially from 1.

Title denotes the title of an idea for which applications are invited; for instance, "Method for safely authenticating a person." The title is entered by a person who has invited applications for the idea in step S5-1.

If an idea for which applications are invited has been conceived, the member clicks the title of the idea (step S6-4). As a result, the current WEB page is switched to another WEB page which shows details of the invitation (step S6-5). The WEB page states specific details about the invitation of applications for an idea and an "offering price" for the idea. Further, the WEB page is provided with an "Application" button. After having clicked the button, a member who desires to file an application enters a specific idea (step S6-6).

The number of times the title of an idea has been clicked corresponds to the number written in the "Browser counter." Further, the number of times ideas have been entered corresponds to a number appearing in the field "Applications filed."

In the manner as mentioned above, filing of applications for the invitations is completed.

### 2-4 Browsing of the ideas filed for the invitation, and conclusion of a contract

Operations required for browsing the ideas filed for the invitation and for selecting an idea for which a contract is to be concluded will now be described by reference to a flowchart.

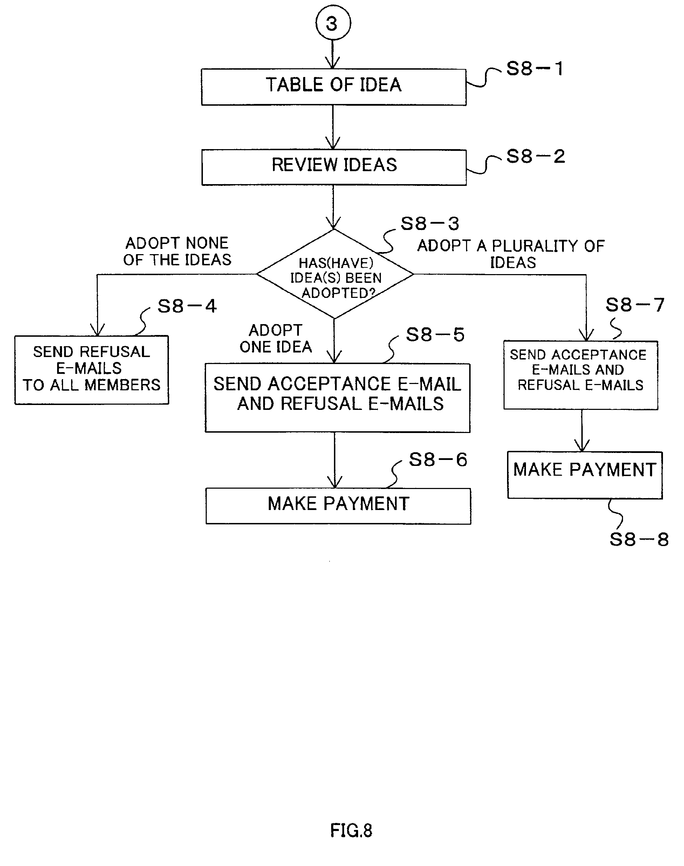

To begin with, a member who desires to browse ideas having been filed for the invitation made by himself accesses the members-only WEB page. Operations for accessing the WEB page are the same as those mentioned previously in connection with Fig. 4. In step S4-5 of the flowchart shown in Fig. 4, the member selects Menu item (3). Operations required when Menu item (3)- has been selected are shown in Fig. 8.

In step S8-1, a table concerning the ideas filed for the invitation is displayed on the WEB page. The member can view and discuss the contents of the WEB page (step S8-2).

At this point in time, the member can select any one of three types of responses. In other words, the member can select any one from the following three types of responses, as shown in connection with step S8-3.
(1) None of the ideas are adopted.
(2) One of the ideas is adopted.
(3) A plurality of ideas are adopted.

When the member who has invited applications for an idea does not adopt any of the ideas, the trading company 20 informs all the members who have filed applications that none of the ideas have been adopted (step S8-4).

If the member has adopted one idea, the trading company 20 informs the member who has sent the idea that his idea has been adopted (step S8-5). An offering price is paid to the member at a later date in a predetermined manner (step S8-6). The payment method is completely identical with that employed in a related-art network trading system. Moreover, in step S8-5 the trading company 20 sends to each of the remaining members whose ideas have not been adopted electronic mails to the effect that "your idea has not been adopted."

In the present embodiment, a plurality of ideas can be adopted. There may be a case where a goal may be achieved by combination of a plurality of ideas. Thus, the trading system according to the present invention enables adoption of a flexible adoption scheme. When the member has adopted a plurality of ideas, the personnel of the trading company 20 send to each of the members whose ideas have been adopted electronic mails to the effect that "your idea has been adopted" (step S8-7). Further, an offering price is paid at a later date to each of the applicants (step S8-8). In contrast, in step S8-7 an electronic mail to the effect that "your idea has not been adopted" is sent to each of the remaining members whose ideas have not been adopted.

In this manner, the member who has invited applications for an idea can adopt acceptable ideas. At this time, in step S8-5 or S8-6, a mere electronic mail to the effect that "Your idea is adopted, and an offering price will be paid in a predetermined manner" is usually sent to the member whose idea has been adopted. However the present embodiment enables adoption of an optional electronic mail such as that described below.

For instance, the member who has invited applications for an idea may send, to a member whose idea has been adopted, a message to the effect that "We adopt your idea. If you do not mind, we would like to ask you to conceive a further idea about an improvement in XXX. If you can do this, we will send you an extra bonus of YYY yen in addition to the offering price." Such a message is set by the personnel of the trading company 20, as required, in accordance with a desire of the member who has invited applications for an idea. This message corresponds to a so-called additional invitation of application for the idea. In particular, in the present embodiment, the trading system enables invitation of an additional application for the idea conceived by the member whose idea has been adopted, thereby enabling acquisition of a more-efficiently-improved idea.

This is based on the idea that, since technology is usually advanced cumulatively, a person who has conceived a certain idea usually improves his idea successively.

In other words, persons who have conceived good ideas are narrowed down to several people, and the member who has invited applications asks them to conceive additional ideas. By means of such a scheme, each person who has conceived ideas can successively acquire rewards and hence can conceive ideas smoothly. Further, the person who invites applications for an idea can acquire superior ideas successively, thereby enabling smoother pursuit of research and development.

As mentioned above, the present embodiment provides an environment which enables not only mere trading of intangible assets, such as ideas, but consecutive generation of new ideas which represent cumulative advances.

After conclusion of a contract, the result of contact is shown on the WEB page for disclosure purpose. Contents to be disclosed are preferably details of an invitation of applications for an idea, the number of ideas filed, and an offering price paid. As mentioned above, all the operations are stored in archives in the storage means 10b of the management server 10. Hence, disclosure of the details of these items serves as advertisement of the network trading system. Further, disclosure of the number of ideas filed for invitations is also desirable.

### 2-5 Launching the Sale of an Idea

In Sections 2-2 through 2-4, there have been described operations from a step of inviting applications for an idea to a step of concluding a contract. The sections that follow describe operations from a step of launching the sale of an idea to a step of concluding a contract.

Operations for selling an idea independently of inviting applications for an idea will be described by reference to a flowchart.

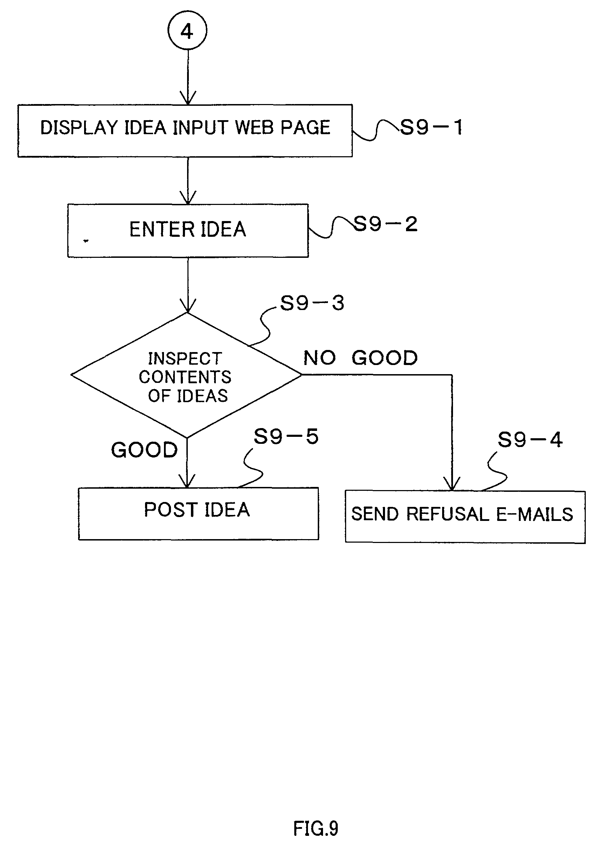

To begin with, a member who desires to sell his idea accesses the members-only WEB page; operations required for making an access have already been described in connection with Fig. 4. In step S4-5 of the flowchart shown in Fig. 4, the member selects Menu item (4). Operations required when Menu item (4) has been selected are provided in the flowchart shown in Fig. 9.

In step S9-1, a WEB page on which an idea desired for sale is to be entered is displayed on the terminal 4 of the member.

A member who desires to launch sale of his idea enters his idea on the WEB page. Entries include "Title," "Category," and "Selling price," in addition to details of the idea desired for sale.

"Title" means the title of the idea for which sale is intended to be launched; for example, a title of "Method of Safely Registering Individuals."

As mentioned above, "Category" means a technical field or applications. From alternatives; i.e., "Computer-related Fields," "Chemistry," "Automotive Engineering," and "Security Techniques," the member selects, as required. The member can make several choices. As will be described later, the categories are utilized when other members browse ideas for sale.

"Selling price" means the price of an idea for sale.

In step S9-3, details of an idea are inspected by personnel of the trading company 20. As in the case of step S502, the inspection is intended for rejecting posting of an idea which would violate public order and standards of decency.

If an idea is found to be rejected as a result of inspection, in step S9-4 an electronic mail to the effect that "your idea is rejected" is transmitted to the member who has launched sale of the idea. In contrast, if an idea is found to be accepted as a result of inspection, in step S9-5 the idea is posted on the electronic bulletin board on the WEB page. Further, an electronic mail to the effect that "your idea has been posted" is sent to the member.

In this way, operations for selling an idea are completed.

### 2-6 Expressing Intent of Adopting an Idea for Sale

There will now be described operations required in a situation in which a member who desires to acquire an idea browses ideas for sale, thereby selecting an idea intended to be adopted.

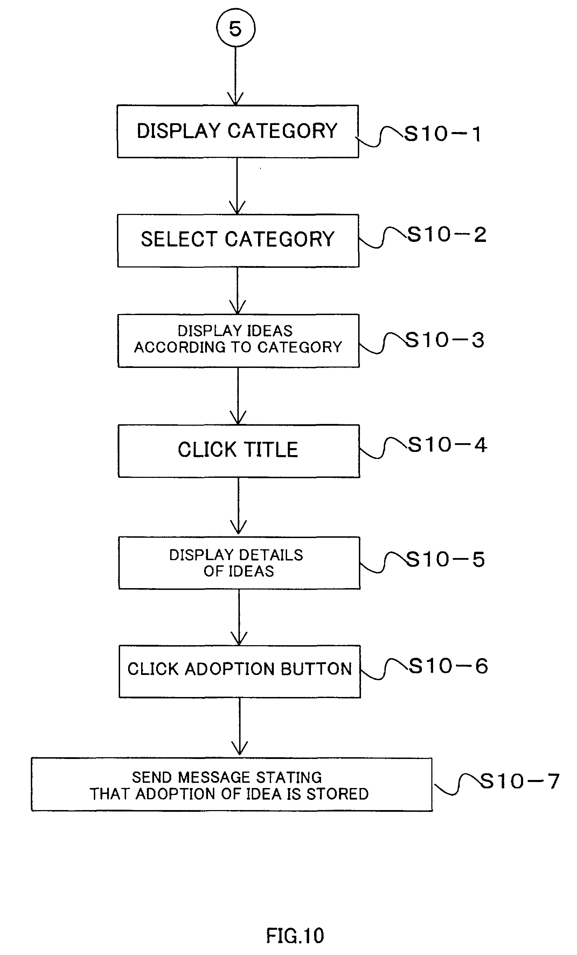

A member who desires to acquire any idea first accesses the members-only WEB page. Operations required for making an access have already been described in connection with Fig. 4. In step S4-5, the member selects Menu item (5). Operations required when Menu item (5) has been selected are provided in the flowchart shown in Fig. 10.

In step S10-1, a list of categories (or fields) is displayed on the WEB page. The member selects from the WEB page a category which he desires to browse (step S10-2).

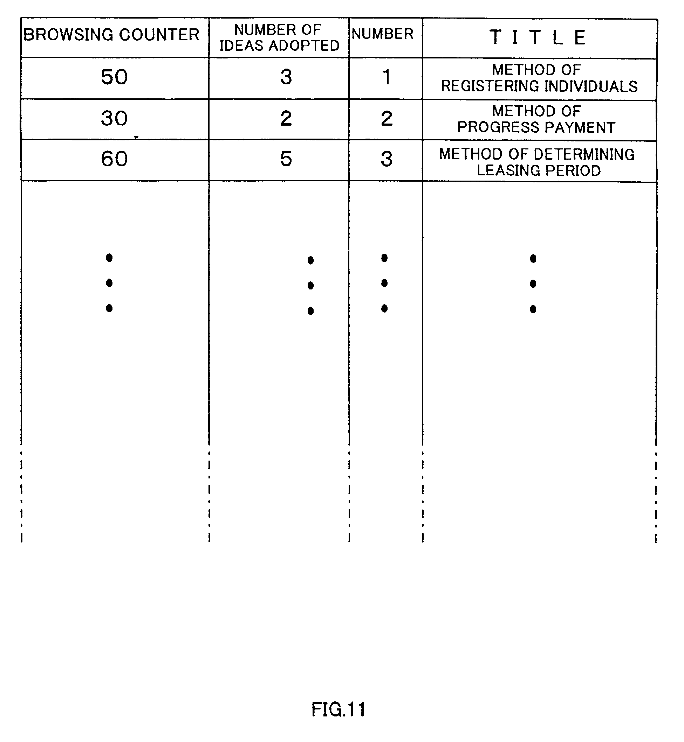

In step S10-3, a list of ideas for sale falling within the selected category are displayed in tabular form. A descriptive view of the table is shown in Fig. 11. As shown in Fig. 11, a single idea for sale is assigned a row of entries; that is, "browsing counter," "number of adoptions offered," "number," and "title of the idea."

The browsing counter shows the number of times other members have browsed details of an idea for sale.

The number of adoptions offered shows the number of adoptions having been offered thus far.

Number denotes serial numbers assigned to the ideas for sale, sequentially from 1.

Title denotes the title of an idea for sale; for instance, "Method for safely registering a person." In step S9-2, the title is entered by a person who has entered an idea for sale.

When an idea desired to be adopted has been determined, the member clicks the title (step S10-4). Then, the table is switched to a WEB page which shows details of the thus-determined idea (step S10-5). The WEB page describes specific details of the idea for sale and a "Selling price." Further, the WEB page is equipped with an "ADOPTION" button. A member who desires to adopt the idea clicks the button (step S10-6). As a result, the intention of adopting the idea is stored in the management server 10 (step S10-7). More specifically, the intention is stored in the storage means 10d.

Here, the number of titles clicked corresponds to a number appearing in the "Browsing counter," and the number of times the adoption button is clicked corresponds to a number appearing in the "Number of Adoptions Offered."

In this way, the intention of adopting an idea for sale is completed.

### 2-7 Browsing of members who desire to adopt an idea, and conclusion of a contract

Next will be described operations required for browsing adoptions offered for sale of an idea and selecting a member with whom a contract is to be concluded.

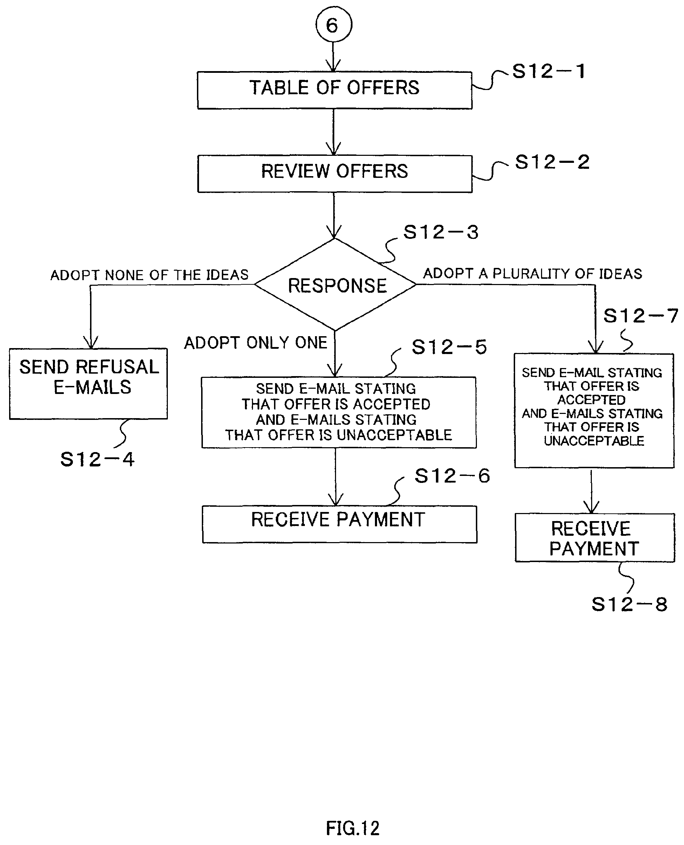

A member who desires to browse adoptions offered for sale of his idea accesses the members-only WEB page. Operations required for making an access have already been described in connection with Fig. 4. In step S4-5 of the flowchart shown in Fig. 4, the member selects Menu item (6). Operations required when Menu item (6) has been selected are provided in the flowchart shown in Fig. 12.

In step S12-1, a list of adoptions offered are displayed on the WEB page. The member views the contents of the WEB page and can review the members who have offered adoptions (S12-2).

At this point in time, the member can choose any one from three types of actions. As will be described in connection with step S12-3, any one of the following three types of actions can be selected.
(1) Refuse all offers.
(2) Accept only one offer.
(3) Accept a plurality of offers.

If the member desires to refuse all offers for reasons of doubtful credibility of the members who have offered adoptions, personnel of the trading company 20 send an electronic mail to that effect to the members who have offered adoptions for the idea (step S12-4).

If the member selects provision of the idea to only one member, the personnel of the trading company 20 inform the member who has offered the accepted adoption of the idea that "the idea is offered to you," by means of an electronic mail (step S12-5). A payment is made in a predetermined manner at a later date (step S12-6). A payment method to be employed is completely identical with that employed in a related-art network trading system. An electronic mail stating that "your offer has been turned down" is sent to each of the remaining members in step S12-5.

If the member selects acceptance of a plurality of offers, an electronic mail stating that "your offer has been accepted" is sent from personnel of the trading company 20 to each of the members whose offers have been accepted (step S12-7). Payments to the member who has launched sale of his idea are made at later dates (step S12-8). An electronic mail stating that "your offer has been turned down" is sent to the remaining members in step S12-7.

Thus, the member who has attempted to launch sale of his idea attains success in selling the idea. The result of sale is posted on the WEB page for disclosure.

As in the case shown in Fig. 8, details of an idea launched for sale, the number of ideas adopted, and payment for the idea are preferably posted.

### Embodiment 2

In the first embodiment, invitation of applications for an idea and sale of ideas have been described. However, the present invention can be applied to trading of other intangible assets, such as programs, proposals, know-how, and knowledge, in the same manner as mentioned previously. Further, the present invention can be applied to trading of a license for intellectual property such as a patent right.

The network trading system according to the present embodiment is essentially intended for embodying safer network trading. Needless to say, the present invention can be applied to safe trading of tangible assets, such as TV sets or cars, as well as to intangible assets.

In the previous embodiment, an "offering price" and a "selling price" are determined in advance. So-called auction (or reverse-auction) may be adopted.

For instance, when auction is to be adopted, members who desire to adopt an idea submit "offering prices" rather than a member who desires to sell his idea providing a "selling price." The idea is sold to a member who is the highest bidder.

In the case of adoption of reverse-auction, members who desire to sell their idea specify "selling prices" rather than a member who invites applications for an idea providing an "offering price." A member who invites applications for an idea weighs the details of an idea against its selling price, thereby selecting a desired idea.

In Embodiment 1, a person is identified by use of signature data. Any other biometric information can be employed, so long as the information enables authentication of a person in a biometric manner. For instance, fingerprints, a retina pattern, or a voice pattern may be employed for personal authentication.

As mentioned above, according to the present invention, a determination is made as to whether or not a user is an authorized member, on the basis of such biometric information. As a result, pretension of third parties can be prevented. Even in the case of intangible assets, safe network trading of the assets can be effected.

Particularly, use of handwritten signature data poses extreme difficulty in counterfeiting a signature, thus enabling realization of a network trading system with a higher degree of safety.

According to the present invention, registration of a member is effected with extra care in two steps; that is, temporary registration and registration. Hence, registration of a third party pretending to be another person is extremely difficult. Hence, safer network trading can be effected.

The present invention enables safe invitation of applications for and sale of an intangible asset. Further, invitation of applications for or sale of an intangible asset which would violate public order and standards of decency is refused. Hence, wholesome and socially healthy network trading can be implemented.

Particularly, during a period of advertisement during which applications for an intangible asset are invited, invitation of applications for another, analogous intangible asset is limited. Hence, stealing of an intangible asset, such as idea, can be effectively prevented.

According to the present invention, the number of times members have browsed the invitation of applications for an idea or sale of an idea can be ascertained. Hence, a trend in members' interests can be ascertained from the number of times browsing has been effected. Further, the number of applications filed for an invitation and the number of offers provided for sale of an idea can be ascertained. Hence, a so-called rate of rejection can be estimated, and the thus-estimated rate can be used as a guide when invitation of applications or offer of adoption is effected.

According to the present invention, the network trading system can cope with a plurality of invitations of applications or adoptions of ideas, thereby enabling more flexible network trading. A member who has invited applications for an idea can inform a member who has submitted an application for the idea of the intention of trading an intangible asset which represents an improvement over the idea for which applications have originally been invited, thereby rendering trading more smooth.

Intangible assets described herein may be knowledge, know-how, or intellectual property, as well as ideas and proposals. In contrast with tangible assets, such as cars, intangible assets are more vulnerable to being stolen by other persons. However, according to the present invention, trading is limited to solely members who have been clearly authenticated, thereby enabling safe trading.

According to the present invention, results of trading are disclosed to the general public as well as to members. Thus, the usefulness of network trading can be known to the general public, thus implementing good advertisement.

In order to effect the above-described operations, if there is used, as a management server, a server equipped with means for providing information to be browsed by the general public, and means for providing information to be browsed by members only, safe network trading can be effected.

The management server according to the present invention authenticates a user if he is an authorized member, through use of biometric information such as handwritten signature data, thereby enabling safer network trading.

## Claims

1. A network trading system which is equipped with a management server and which effects network trading, by way of a network, among members having been registered in advance, the system comprising:
determination means which, when a member accesses the management server, receives biometric information about the member by way of the network and determines, through use of the received biometric information, whether or not the member is an authorized member.

2. The network trading system according to claim 1, wherein the management server comprises
members-only WWW means for allowing the member to browse a members-only WEB page when the determination means has determined the member to be an authorized member.

3. The network trading system according to claim 1, wherein the biometric information is handwritten signature data pertaining to the member.

4. A method of effecting, by way of a network, network trading among members having been registered in advance, wherein registration of a member involves
a temporary registration step in which a person who desires to register himself as a member sends information about himself, including at least his postal address, to the management server by way of the network;
a delivery step in which the management server delivers means for inputting biometric information to the person who desires registration, on the basis of the information about the person;
a registration step in which the person who desires to register himself as a member sends his biometric information to the management server, by way of the Internet and through use of the delivered means to be used for entering biometric information; and
a member registration step in which the person who desires to register himself as a member is registered as a member as a result of the management server storing the biometric information that has been transmitted.

5. The network trading method according to claim 4, wherein the biometric information corresponds to handwritten signature data pertaining to the member.

6. A method of effecting network trading among predetermined members through use of a management server having an electronic bulletin board function, the method comprising:
an invitation transmission step of sending to the management server by way of a network an intangible or tangible asset for which a member desires to invite applications;
an invitation posting step of posting on an electronic bulletin board the invitation that has been transmitted;
an invitation browsing step in which other members browse the invitation of applications posted on the electronic bulletin board by means of accessing the management server by way of the network;
an application transmission step in which the members send information about their intangible or tangible assets to the management server by way of the network, in response to the invitation of applications posted on the electronic bulletin board;
an application storage step in which the management server stores the applications that have been transmitted;
an application browsing step in which the member accesses the management server by way of the network, thereby browsing the stored applications; and
an application selection transmission step in which the member selects a desired application from the applications having been browsed and sends the result of selection to the management server by way of the network, wherein
the management server identifies the member who has invited applications and the members who have filed applications as authorized members when they access the management server and allows them to access the management server only when they are identified as authorized members.

7. The network trading method according to claim 6, wherein the biometric information corresponds to handwritten signature data pertaining to the members.

8. The network trading method according to claim 6, wherein the invitation posting step further includes:
a public-order-and-standards-of-decency step of inspecting whether or not the intangible asset for which applications are invited violates public order and standards of decency; and
a first posting refusal step of refusing posting of the invitation on the electronic bulletin board when the intangible asset has been determined to violate public order and standards of decency in the public-order-and-standards-of-decency step.

9. The network trading method according to claim 6, wherein the invitation posting step further includes:
a public-order-and-standards-of-decency step of inspecting whether or not an invitation of applications for an intangible asset analogous to an intangible asset for which invitation of applications is desired has already been posted on the electronic bulletin board; and
a second posting refusal step of refusing posting of the invitation on the electronic bulletin board when an invitation of applications for an analogous intangible asset is determined to have already been posted on the electronic bulletin board.

10. The network trading method according to claim 6, wherein, in the application browsing step, the number of times other members have browsed details of the invitation of applications for the intangible or tangible asset is displayed for the other members.

11. The network trading method according to claim 6, wherein, in the application browsing step, the number of applications which have been filed thus far for the invitation is displayed for the other members.

12. The network trading method according to claim 6, wherein, in the application selection transmission step, the member can select one application or two or more applications.

13. The network trading method according to claim 6, wherein, in the application selection transmission step, the member can invite an additional application for an intangible asset which represents an improvement over the intangible asset for which the selected application has been filed, in connection with a person who has filed the application selected by the member.

14. A method of effecting network trading among predetermined members through use of a management server having an electronic bulletin board function, the method comprising:
a sale transmission step of sending an intangible or tangible asset for which a member desires to launch sale to the management server by way of a network;
a sale posting step of posting on an electronic bulletin board the sale that has been transmitted;
a sale browsing step in which other members browse the sale posted on the electronic bulletin board by means of accessing the management server by way of the network;
an adoption transmission step in which the members send, to the management server by way of the network, messages reporting adoption of the intangible or tangible asset in response to the sale posted on the electronic bulletin board;
an adoption storage step in which the management server stores the messages that state an intention of adoption and have been transmitted;
an adoption browsing step in which the member accesses the management server by way of the network, thereby browsing the stored messages; and
an adoption selection transmission step in which the member selects a desired offer from the messages which have been browsed and state the intention of adoption and sends the result of selection to the management server by way of the network, wherein
the management server identifies the member who has launched sale of his idea and the members who have offered adoption as authorized members when they access the management server, and allows them to access the management server only when they have been identified as authorized members.

15. The network trading method according to claim 14, wherein the biometric information corresponds to handwritten signature data pertaining to the members.

16. The network trading method according to claim 14, wherein the sale posting step further includes:
a public-order-and-standards-of-decency step of inspecting whether or not the intangible asset for which launch of sale is desired violates public order and standards of decency; and
a first posting refusal step of refusing posting of the sale on the electronic bulletin board when the intangible asset has been determined to violate public order and standards of decency in the public-order-and-standards-of-decency step.

17. The network trading method according to claim 14, wherein, in the sale browsing step, the number of times other members have browsed details of the intangible or tangible asset for which sale has been launched is displayed for the other members.

18. The network trading method according to claim 14, wherein, in the sale browsing step, the number of adoptions which have been offered until now is displayed for the other members.

19. The network trading method according to claim 14, wherein, in the adoption selection step, the member can select one offer or two or more offers.

20. The network trading method according to any one of claims 6 through 19, wherein the intangible asset corresponds to knowledge.

21. The network trading method according to any one of claims 6 through 19, wherein the intangible asset corresponds to a proposal or an idea.

22. The network trading method according to any one of claims 6 through 19, wherein the intangible asset corresponds to know-how.

23. The network trading method according to any one of claims 6 through 19, wherein the intangible asset corresponds to intellectual property.

24. The network trading method according to any one of claims 6 through 19, further comprising a trading result disclosure step of disclosing at least details of an intangible or tangible asset for which a contract has been concluded and a payment to the general public as well as to members when network trading of the intangible or tangible asset has been established.

25. A management server used in a network trading system for effecting network trading among predetermined members, the server comprising:
general WWW means for providing a WEB page browsable by the general public as well as by members; and
members-only WWW means for providing a WEB page browsable by members only.

26. The management server according to claim 25, further comprising personal authentication means for inspecting biometric information that has been transmitted by way of a network and identifying whether or not a person who has sent the information is an authorized member; wherein the members-only WWW means allows browsing by only a person who has been determined to be an authorized member by the personal authentication means.

27. The management server according to claim 25 or 26, wherein the biometric information corresponds to handwritten signature data.
